# EUROPÄISCHE PATENTSCHRIFT

(11) **EP 3 892 089 B1**
(45) Veröffentlichungstag und Bekanntmachung des Hinweises auf die Patenterteilung: **03.01.2024**
(21) Anmeldenummer: 20168953.6
(22) Anmeldetag: 09.04.2020
(51) Int. Cl.: A01G 9/02

(54) **VERFAHREN ZUR AUFZUCHT UND ANORDNUNG VON PFLANZEN**
METHOD FOR GROWING AND ARRANGING PLANTS
PROCÉDÉ DE CULTURE ET D'AGENCEMENT DES PLANTES

(43) Veröffentlichungstag der Anmeldung: 13.10.2021
(73) Patentinhaber: Hartmann, Johannes, 86643 Rennertshofen (DE)
(72) Erfinder: Hartmann, Johannes, 86643 Rennertshofen (DE)
(74) Vertreter: Dr. Stark & Partner Patentanwälte mbB

(56) Entgegenhaltungen:
- DE-U1- 9 101 621
- US-A- 152 758
- US-A1- 2004 031 194
- US-A1- 2009 038 220
- US-A1- 2015 121 755

## Beschreibung

Die Erfindung betrifft ein Verfahren zur Aufzucht von Topfpflanzen und zur Anordnung von zumindest zwei Topfpflanzen nebeneinander in einem Verkaufs-Topf zum Zwecke des Verkaufs der Topfpflanzen.

Aus der Praxis sind derartige Verfahren bekannt, wobei die Topfpflanzen jeweils ihrer Pflanzengattung entsprechend separat kultiviert werden. Insoweit sind mehrere Topfpflanzen der gleichen Pflanzengattung zusammen in einem Verkaufs-Topf angeordnet und werden dort zunächst kultiviert und gelangen dann anschließend auch in diesem Verkaufs-Topf in den Verkauf.

Nachteilig hierbei ist, dass immer nur eine Pflanzengattung in dem Verkaufs-Topf kultiviert werden kann, da verschiedene Pflanzengattungen in der Regel auch unterschiedlich kultiviert werden sollten, da sie andere Aufzuchtbedingungen benötigen und auch teilweise unterschiedliche Aufzuchtzeiten haben. Eine gemeinsame Kultivierung von verschiedenen Pflanzengattungen ist somit aus biologischer Sicht zu vermeiden.

Sofern also Pflanzenkäufer unterschiedliche Pflanzengattungen in einem gemeinsamen Topf haben möchten, müssen sie sich diese selbst zusammenstellen und in einen eigenen Topf zusammenpflanzen. Im Stand der Technik sind folgende Verfahren bekannt: US 2004/031194 A1, US 152 758 A, US 2015/121755 A1, DE 91 01 621 U1 und US 2009/038220 A1.

Aufgabe der Erfindung ist es, die vorgenannten Nachteile zu vermeiden.

Hierfür soll das Verfahren zumindest zwei unterschiedliche Pflanzengattungen betreffen, wobei die Topfpflanzen der unterschiedlichen Pflanzengattungen in einem ersten Schritt unabhängig voneinander in verschiedener Weise in separaten Aufzuchts-Behältnissen in einer eigenen Aufzuchts-Erdschicht kultiviert werden und in einem zweiten Schritt zumindest zwei Topfpflanzen für die Auslieferung an den Verkauf jeweils mit ihrer eigenen Aufzuchts-Erdschicht in einem gemeinsamen Verkaufs-Topf auf einer gemeinschaftlichen vollflächigen Basis-Erdschicht nebeneinander angeordnet werden, wobei die in dem gemeinsamen Verkaufs-Topf angeordneten Topfpflanzen zumindest zwei unterschiedlichen Pflanzengattungen angehören.

Hierdurch können verschiedene Pflanzengattungen zwar optimal für die jeweilige Pflanzengattung kultiviert werden, jedoch gleichwohl zusammen in einem gemeinsamen Verkaufs-Topf in den Verkauf gelangen und somit von einem Käufer entsprechend erworben werden.

Erfindungsgemäß ergänzen sich die Höhe der Aufzuchts-Erdschicht und die Höhe der Basis-Erdschicht zu der Füllhöhe der Erdschicht im Verkaufs-Topf. Somit können die Topfpflanzen nicht nur in ihrer jeweils eigenen Aufzuchts-Erdschicht wurzeln, sondern sowohl seitlich in benachbarte Aufzuchts-Erdschichten und auch nach unten in die unterhalb vorgesehene Basis-Erdschicht. Somit resultiert auch ein verstärkter Zusammenhalt der benachbart angeordneten Aufzuchts-Erdschichten der Topfpflanzen, so dass zu einem späteren Zeitpunkt die Gesamtheit aus Aufzuchts-Erdschichten und der unterhalb vorgesehenen Basis-Erdschicht leicht im Ganzen aus dem Verkaufs-Topf entfernt und beispielsweise anderweitig eingepflanzt werden kann. Dabei kann die gesamte Füllhöhe der Erdschicht im Verkaufs-Topf bis ca. 1 cm bis 3 cm unterhalb des Rands des Verkaufs-Topfs reichen.

Dabei betragen die Höhe der Aufzuchts-Erdschicht und die Höhe der Basis-Erdschicht jeweils in etwa die Hälfte der gesamten Füllhöhe der Erdschicht im Verkaufs-Topf.

Die Aufzucht der Topfpflanzen erfolgt in durch Boden und umlaufende Wandungen gebildeten Aufzuchts-Räumen und die Aufzuchts-Erdschicht mit der darin verwurzelten Topfpflanze wird dann auf die in dem Verkaufs-Topf angeordnete Basis-Erdschicht umgesetzt, wobei die Form der Aufzuchts-Räume und die Form des Verkaufs-Topfs derart aufeinander abgestimmt ist, dass sich die Formen von mehreren Aufzuchts-Räumen zu der Form des Verkaufs-Topfs ergänzen.

Vorzugsweise können die Aufzuchts-Räume durch Mulden in als Platten ausgebildeten Aufzuchts-Behältnissen gebildet sein. Da der Boden und die umlaufende Wandung somit fest miteinander verbunden sind, ist ein leichter Transport mehrerer Aufzuchts-Räume mit den darin befindlichen Aufzuchts-Erdschichten sowie den darin verwurzelten Topfpflanzen in einfacher Weise möglich.

Vorzugsweise kann der Verkaufs-Topf eine kreisrunde Querschnittsfläche haben, und die Querschnittsflächen der Aufzuchts-Räume können jeweils die Form eines Kreissektors haben.

In der Geometrie ist ein Kreissektor, auch Kreisausschnitt genannt, die Teilfläche einer Kreisfläche, die von einem Kreisbogen und zwei Kreisradien begrenzt wird. Dabei kann die Querschnittsfläche von zumindest einem Aufzuchts-Raum die Form eines Kreissektors haben, der ein Drittel oder ein Viertel eines Vollkreises bildet. Es sind aber auch Formen eines Kreissektors möglich, der nur ein Sechstel oder ein Achtel bzw. ein Zehntel oder ein Zwölftel eines Vollkreises bildet. Dann hat der entsprechende Aufzuchts-Raum die Form eines mehr oder weniger "großen" Tortenstücks. Auch kann zumindest ein Aufzuchts-Raum die Form eines Kreissektors haben, der eine Hälfte oder sogar 3/4 eines Vollkreises bildet.

Vorteilhafterweise können mehrere Aufzuchts-Räume, vorzugsweise alle Aufzuchts-Räume, eine identische Form und Größe haben, z. B. kann die Querschnittsfläche jeweils ein Viertel eines Vollkreises sein.

Vorzugsweise kann es sich bei den in dem Verkaufs-Topf angeordneten Topfpflanzen um Zierpflanzen und/oder Stauden handeln. Auch kann es sich bei den in dem Verkaufs-Topf angeordneten Topfpflanzen um Pflanzen für den Verzehr durch den Menschen handeln, wie z. B. Kräuter oder aber Fruchtund/oder Gemüsepflanzen.

Alternativ kann es sich bei den in dem Verkaufs-Topf angeordneten Topfpflanzen um Futterpflanzen für den Verzehr durch Haustiere handeln, wie z. B. verschiedene Sorten Katzengras.

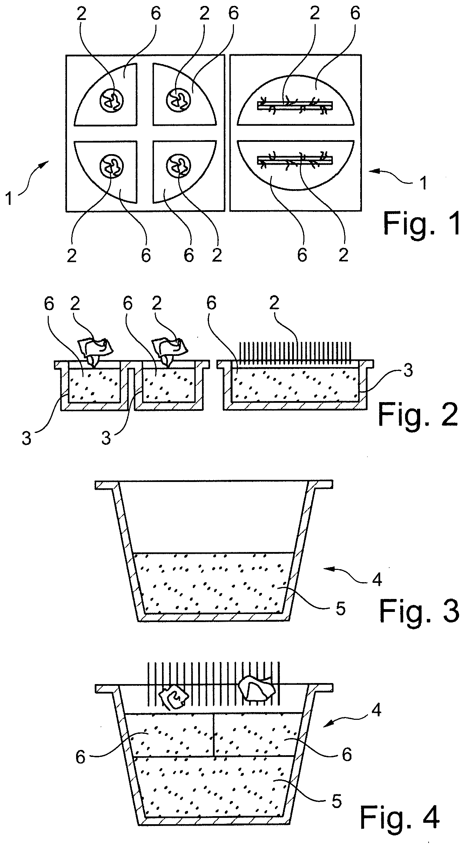

Anhand von Zeichnungen (Fig. 1 bis 5) wird das erfindungsgemäße Verfahren nachstehend erläutert. In allen Figuren werden für gleiche bzw. gleichartige Bauteile übereinstimmende Bezugszeichen verwendet.

Fig. 1 zeigt zwei Platten 1 für die Aufzucht von Topfpflanzen 2. Die Platten 1 weisen jeweils mehrere als Mulden ausgebildete Aufzuchts-Räume 3 für die Topfpflanzen 2 auf. In den Aufzuchts-Räumen 3 der Platten 1 sind jeweils Aufzuchts-Erdschichten 6 vorgesehen, in denen die Topfpflanzen 2 kultiviert werden.

Dabei sind bei der linken Platte 1 vier Aufzuchts-Räume 3 vorgesehen, die in der Draufsicht jeweils einen Querschnitt in Form eines Viertelkreises aufweisen und in denen Topfpflanzen 2 einer ersten Pflanzengattung kultiviert werden. Bei der rechten Platte 1 sind zwei Aufzuchts-Räume 3 vorgesehen, die in der Draufsicht jeweils einen Querschnitt in Form eines Halbkreises aufweisen und in denen Topfpflanzen 2 einer zweiten Pflanzengattung kultiviert werden. In jeder der beiden Platten 1 sind somit jeweils nur Topfpflanzen 2 einer Pflanzengattung vorgesehen.

Wie aus Fig. 3 ersichtlich, befindet sich zunächst in dem Verkaufs-Topf 4 nur eine vollflächige Basis-Erdschicht 5.

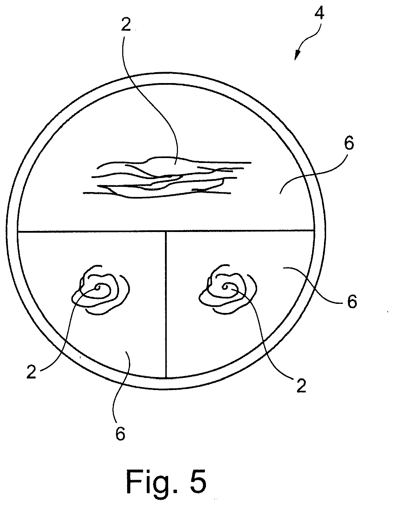

Nachdem die Topfpflanzen 2 kultiviert wurden und sich in einem Wachstumsund Entwicklungszustand befinden, in dem sie zum Verkauf gelangen sollen, werden in einem zweiten Schritt dann die entsprechenden Aufzuchts-Erdschichten 6 mit den darin kultivierten unterschiedlichen Topfpflanzen 2 jeweils aus den Aufzuchts-Räumen 3 in den Platten 1 entfernt und in dem Verkaufs-Topf 2 angeordnet (vgl. Fig. 4 und 5).

Dabei sind zwei Topfpflanzen 2 der ersten Pflanzengattung aus der linken Platte 1 und eine Topfpflanze 2 der zweiten Pflanzengattung aus der rechten Platte 1 in dem Verkaufs-Topf 4 vorgesehen.

Entsprechend der kreisrunden Querschnittsfläche des Verkaufs-Topfs 2 ergänzen sich die beiden Aufzuchts-Erdschichten 6 aus der linken Platte 1 und die eine Aufzuchts-Erdschicht 6 aus der rechten Platte 1 zu einem Vollkreis, welcher dem Querschnitt der vollflächigen Basis-Erdschicht 5 in dem Verkaufs-Topf 4 entspricht.

Wie aus Fig. 4 ersichtlich, ergänzen sich die Höhe der jeweiligen Aufzuchts-Erdschicht 6 und die Höhe der Basis-Erdschicht 5 zu der Füllhöhe der Erdschicht im Verkaufs-Topf 4. Dabei reicht die gesamte Füllhöhe der Erdschicht im Verkaufs-Topf 4 bis ca. 1 cm bis 3 cm unterhalb des Rands des Verkaufs-Topfs 4.

## Patentansprüche

1. Verfahren zur Aufzucht von Topfpflanzen (2) und zur Anordnung von zumindest zwei Topfpflanzen (2) nebeneinander in einem Verkaufs-Topf (4) zum Zwecke des Verkaufs der Topfpflanzen (2), wobei das Verfahren zumindest zwei unterschiedliche Pflanzengattungen betrifft, wobei die Topfpflanzen (2) der unterschiedlichen Pflanzengattungen in einem ersten Schritt unabhängig voneinander in verschiedener Weise in separaten Aufzuchts-Behältnissen in einer eigenen Aufzuchts-Erdschicht (6) kultiviert werden und in einem zweiten Schritt zumindest zwei Topfpflanzen (2) für die Auslieferung an den Verkauf jeweils mit ihrer eigenen Aufzuchts-Erdschicht (6) in einem gemeinsamen Verkaufs-Topf (4) auf einer gemeinschaftlichen vollflächigen Basis-Erdschicht (5) nebeneinander angeordnet werden, wobei die in dem gemeinsamen Verkaufs-Topf (4) angeordneten Topfpflanzen (2) zumindest zwei unterschiedlichen Pflanzengattungen angehören, wobei sich die Höhe der Aufzuchts-Erdschicht (6) und die Höhe der Basis-Erdschicht (5) zu der Füllhöhe der Erdschicht im Verkaufs-Topf (4) ergänzen und die Höhe der Aufzuchts-Erdschicht (6) und die Höhe der Basis-Erdschicht (5) jeweils in etwa die Hälfte der gesamten Füllhöhe der Erdschicht im Verkaufs-Topf (4) betragen und wobei weiterhin die Aufzucht der Topfpflanzen (2) in durch Boden und umlaufende Wandungen gebildeten Aufzuchts-Räumen (3) erfolgt und die Aufzuchts-Erdschicht (6) mit der darin verwurzelten Topfpflanze (2) dann auf die in dem Verkaufs-Topf (4) angeordnete Basis-Erdschicht (5) umgesetzt wird, so dass die Topfpflanzen nicht nur in ihrer jeweils eigenen Aufzuchts-Erdschicht, sondern sowohl seitlich in benachbarte Aufzuchts-Erdschichten und auch nach unten in die unterhalb vorgesehene Basis-Erdschicht wurzeln können, und wobei die Form der Aufzuchts-Räume (3) und die Form des Verkaufs-Topfs (4) derart aufeinander abgestimmt sind, dass sich die Formen von mehreren Aufzuchts-Räumen (3) zu der Form des Verkaufs-Topfs (4) ergänzen.

2. Verfahren nach dem vorhergehenden Anspruch, **dadurch gekennzeichnet, dass** die Aufzuchts-Räume (3) durch Mulden in als Platten (1) ausgebildeten Aufzuchts-Behältnissen gebildet sind.

3. Verfahren nach einem der vorhergehenden Ansprüche, **dadurch gekennzeichnet, dass** der Verkaufs-Topf (4) eine kreisrunde Querschnittsfläche hat und die Querschnittsflächen der Aufzuchts-Räume (3) die Form eines Kreissektors haben.

4. Verfahren nach einem der vorhergehenden Ansprüche, **dadurch gekennzeichnet, dass** die Querschnittsflächen von zumindest einem Aufzuchts-Raum (3) die Form eines Kreissektors hat, der ein Drittel oder ein Viertel eines Vollkreises bildet.

5. Verfahren nach einem der vorhergehenden Ansprüche, **dadurch gekennzeichnet, dass** mehrere Aufzuchts-Räume (3), vorzugsweise alle Aufzuchts-Räume (3), eine identische Form und Größe haben.

6. Verfahren nach einem der vorhergehenden Ansprüche, **dadurch gekennzeichnet, dass** es sich bei den in dem Verkaufs-Topf (4) angeordneten Topfpflanzen (2) um Zierpflanzen und/oder Stauden handelt.

7. Verfahren nach einem der Ansprüche 1 bis 4, **dadurch gekennzeichnet, dass** es sich bei den in dem Verkaufs-Topf (4) angeordneten Topfpflanzen (2) um Pflanzen für den Verzehr durch den Menschen handelt, wie z. B. Kräuter.

8. Verfahren nach einem der Ansprüche 1 bis 4, **dadurch gekennzeichnet, dass** es sich bei den in dem Verkaufs-Topf (4) angeordneten Topfpflanzen (2) um Futterpflanzen für den Verzehr durch Haustiere handelt, wie z. B. verschiedene Sorten Katzengras.

## Claims

1. Method for growing potted plants (2) and for arranging at least two potted plants (2) side by side in a sales pot (4) for the purpose of selling the potted plants (2), wherein the method relates to at least two different plant genera, wherein the potted plants (2) of the different plant genera are in a first step cultivated independently of one another in different ways and in separate growing containers in their own growing layer of soil (6) and in a second step at least two potted plants (2) for delivery to sale are arranged next to each other and each with their own growing layer of soil (6) in a common sales pot (4) on a common full-surface base layer of soil (5), wherein the potted plants (2) arranged in the common sales pot (4) belong at least to two different plant genera, wherein the height of the growing layer of soil (6) and the height of the base layer of soil (5) add up to the filling height of the layer of soil in the sales pot (4) and the height of the growing layer of soil (6) and the height of the base layer of soil (5) are each approximately half of the total filling height of the layer of soil in the sales pot (4) and wherein furthermore the potted plants (2) are grown in growing rooms (3) formed by a bottom and surrounding walls and the growing layer of soil (6) with the potted plant (2) rooted therein is then moved on top of the base layer of soil (5) arranged in the sales pot (4), so that the potted plants can root not only in their own growing layer of soil but can also root laterally into neighboring growing layers of soil and also downwards into the base layer of soil provided below, and wherein the shape of the growing rooms (3) and the shape of the sales pot (4) are matched to each other in such a way, that the shapes of several growing rooms (3) combine to the shape of the sales pot (4).

2. Method according to the preceding claim, **characterized in that** the growing rooms (3) are formed by troughs in growing containers designed as sheets (1).

3. Method according to one of the preceding claims, **characterized in that** the sales pot (4) has a circular cross-sectional area and that the cross-sectional areas of the growing rooms (3) have the shape of a sector of a circle.

4. Method according to one of the preceding claims, **characterized in that** the cross-sectional areas of at least one growing room (3) has the shape of a sector of a circle which forms a third or a quarter of a full circle.

5. Method according to one of the preceding claims, **characterized in that** several growing rooms (3), preferably all growing rooms (3), have an identical shape and size.

6. Method according to one of the preceding claims, **characterized in that** the potted plants (2) arranged in the sales pot (4) are ornamental plants and/or perennials.

7. Method according to one of claims 1 to 4, **characterized in that** the potted plants (2) arranged in the sales pot (4) are plants for human consumption, for example such as herbs.

8. Method according to one of claims 1 to 4, **characterized in that** the potted plants (2) arranged in the sales pot (4) are food plants for consumption by pets, for example such as different types of cat grass.

## Revendications

1. Méthode pour cultiver des plantes en pot (2) et pour disposer au moins deux plantes en pot (2) l'une à côté de l'autre dans un pot de vente (4) en vue de vendre les plantes en pot (2), dans laquelle la méthode concerne au au moins deux genres végétaux différents, dans laquelle dans une première étape, les plantes en pot (2) des différents genres végétaux sont cultivées indépendamment les unes des autres de différentes manières dans des récipients de culture séparés dans leur propre couche de terre de croissance (6) et, dans une deuxième étape, au moins deux plantes en pot (2), chacune avec sa propre couche de terre de croissance (6), sont disposées à côté de chacune d'autres pour la livraison à la vente dans un pot de vente commun (4) sur la surface intégrale d'une couche de terre de base (5) commune, et les plantes en pot (2) disposées dans le pot de vente commun (4) appartiennent au moins à deux genres végétaux différents, et en ce que la hauteur de la couche de terre de croissance (6) et la hauteur de la couche de terre de base (5) se complètent au niveau de remplissage de la couche de terre dans le pot de vente (4), et la hauteur de la couche de terre de croissance (6) et la hauteur de la couche de terre de base (5) correspondent respectivement à environ la moitié de la niveau totale de remplissage de la couche de terre dans le pot de vente (4) et en continuant que les plantes en pot (2) sont cultivées dans des espaces de culture (3) formés par le fond et les murs environnants et que la couche de terre de croissance (6) avec la plante en pot (2) enracinée dedans est ensuite déplacée sur la couche de terre de base (5) disposée dans le pot de vente (4), de sorte que les plantes en pot puissent s'enraciner non seulement dans leur propre couche de terre de croissance, mais aussi latéralement dans les couches de terre de croissance voisines et aussi vers le bas dans la couche de terre de base prévue en dessous, et dans laquelle la forme des espaces de culture (3) et la forme du pot de vente (4) sont coordonnées de telle sorte que les formes de plusieurs espaces de culture (3) se complètent et forment la forme du pot de vente ( 4).

2. Méthode selon la revendication précédente, **caractérisé en ce que** les espaces de culture (3) sont formés par des cavités dans des conteneurs de culture réalisés sous forme de plaques (1).

3. Méthode selon l'une des précédentes, **caractérisé en ce que** le pot de vente (4) a une section transversale circulaire et **en ce que** les sections transversales des espaces de culture (3) ont la forme d'un sous-section de cercle.

4. Méthode selon l'une des précédentes, **caractérisé en ce que** les sections transversales d'au moins un espace de culture (3) ont la forme d'un sous-section de cercle formant un tiers ou un quart de cercle complet.

5. Méthode selon l'une des revendications précédentes, **caractérisé en ce que** plusieurs espaces de culture (3), de préférence tous les espaces de culture (3), ont une forme et des dimensions identiques.

6. Méthode selon l'une des revendications précédentes, **caractérisé en ce que** les plantes en pot (2) disposées dans le pot de vente (4) sont des plantes ornementales et/ou des plantes vivaces.

7. Méthode selon l'une des revendications 1 à 4, **caractérisé en ce que** les plantes en pot (2) disposées dans le pot de vente (4) sont des plantes destinées à la consommation humaine, comme par exemple des herbes.

8. Méthode selon l'une des revendications 1 à 4, **caractérisé en ce que** les plantes en pot (2) disposées dans le pot de vente (4) sont des plantes alimentaires destinées à la consommation d'animaux domestiques, comme par exemple différents types d'herbe à chat.
